# EUROPEAN PATENT APPLICATION

(11) **EP 4 607 127 A1**
(43) Date of publication of application: **27.08.2025**
(21) Application number: 24305282.6
(22) Date of filing: 20.02.2024
(51) Int. Cl.: F25J 1/00

(54) **CARBON CAPTURE USING CRYOGENIC TECHNIQUES**

(71) Applicant: Technip Energies France, 92741 Nanterre Cedex (FR)
(72) Inventor: Nanda, Rajeev, 92741 Nanterre Cedex (FR); Hu, Jichuan, 92741 Nanterre Cedex (FR); Maldonaldo, Miguel, 92741 Nanterre Cedex (FR); Braden, Aaron, 92741 Nanterre Cedex (FR)
(74) Representative: Edson, Russell Gregory

(57) **Abstract**

A system can be used to capture carbon dioxide using cryogenic techniques. The system can include a compression subsystem, a dehydration subsystem, a desublimation subsystem, and a refrigeration subsystem. The compression subsystem can be positioned to receive a gaseous mixture, which can include carbon dioxide, and to compress the gaseous mixture. The dehydration subsystem can be coupled with the compression subsystem to remove water from the received gaseous mixture to generate a compressed dry gaseous mixture. The desublimation subsystem can be coupled with the compression subsystem and the dehydration subsystem to receive the compressed dry gaseous mixture and to cause the carbon dioxide to desublimate from the compressed gaseous mixture. The refrigeration subsystem can be coupled with the desublimation subsystem to provide cooling to the desublimation subsystem using dry air as a refrigerant.

## Description

### Technical Field

The present disclosure relates generally to carbon capture and, more particularly (although not necessarily exclusively), to using a cryogenic system or cryogenic techniques to capture carbon dioxide from gaseous mixtures.

### Background

Carbon dioxide is produced through various processes associated with energy generation, transportation, and the like. In some examples, carbon dioxide is generated via a combustion process that converts, among other things, oxygen into carbon dioxide. Carbon dioxide may be harmful if allowed to be emitted to the atmosphere, and, in some examples, carbon dioxide can be used in other processes as an input. Capturing carbon dioxide, for example generated via a combustion process, can be difficult and may involve excessive amounts of energy or generation of hazardous waste.

### Summary

In some examples, a system can be used to generate carbon dioxide via cryogenic techniques. The system can include a compression subsystem, a dehydration subsystem, a carbon dioxide desublimation subsystem, and a refrigeration subsystem. The compression subsystem can be positioned to receive a gaseous mixture and to compress the gaseous mixture into a compressed gaseous mixture. The gaseous mixture can include carbon dioxide. The dehydration subsystem can be coupled with the compression subsystem to remove water from the compressed gaseous mixture to generate a compressed dry gaseous mixture. The carbon dioxide desublimation subsystem can be coupled with the compression subsystem and the dehydration subsystem to receive the compressed dry gaseous mixture and to cause the carbon dioxide to desublimate from the compressed dry gaseous mixture. The carbon dioxide desublimation subsystem can be switched between a desublimation module and a melting module to produce the carbon dioxide from the compressed dry gaseous mixture. The refrigeration subsystem can be coupled with the carbon dioxide desublimation subsystem to provide cooling to the carbon dioxide desublimation subsystem using dry air as a refrigerant. The refrigeration subsystem can be operated at a first pressure that can be higher than a critical pressure of the refrigerant.

In some examples, a method can be used to generate carbon dioxide via cryogenic techniques. The method can include receiving, by a compression subsystem of a cryogenic carbon capture system, a gaseous mixture that includes carbon dioxide. The method can include compressing, by the compression subsystem, the gaseous mixture into a compressed gaseous mixture. The method can include dehydrating, by a dehydration subsystem of the cryogenic carbon capture system, the compressed gaseous mixture to generate a compressed dry gaseous mixture. The method can include desublimating, by a carbon dioxide desublimation subsystem of the cryogenic carbon capture system, the carbon dioxide from the compressed dry gaseous mixture. The carbon dioxide desublimation subsystem can be alternated between a desublimation module and a melting module to produce the carbon dioxide from the compressed dry gaseous mixture. Cooling can be provided to the carbon dioxide desublimation subsystem by a refrigeration subsystem of the cryogenic carbon capture system that includes dry air as a refrigerant. The refrigeration subsystem can be operated at a first pressure that is higher than a critical pressure of the refrigerant. The method can include transmitting, by the carbon dioxide desublimation subsystem, carbon dioxide product from the carbon dioxide for storage or for use in a subsequent process.

### Brief Description of the Drawings

FIG. 1 is a flow diagram illustrating the general operation of an example of a system that uses cryogenic techniques to capture carbon dioxide from gaseous mixtures according to some examples of the present disclosure.
FIG. 2 is a flow diagram illustrating the operation of the example of the system that uses cryogenic techniques to capture carbon dioxide from gaseous mixtures according to some examples of the present disclosure.
FIG. 3 is a flow diagram illustrating the operation of another example of a system that uses cryogenic techniques to capture carbon dioxide from gaseous mixtures according to some examples of the present disclosure.
FIG. 4 is a flowchart of a process for capturing carbon dioxide from gaseous mixtures using cryogenic techniques according to some examples of the present disclosure.

### Detailed Description

Certain aspects and features of the present disclosure relate to carbon capture techniques that involve a system with one or more subsystems that can be used to capture carbon dioxide in a cryogenic environment. Carbon capture may refer to extracting carbon dioxide or other suitable carbon-based materials, which may be generated as exhaust or as a by-product through one or more processes such as combustion or other similar processes. The system may be operated in the cryogenic environment, which may involve temperatures low enough, and in some cases pressures high enough, to facilitate desublimation of carbon dioxide from gaseous mixtures. Desublimation of carbon dioxide may involve carbon dioxide transitioning from a gas state to a solid state without first transitioning through a liquid state. The system can use a carbon dioxide desublimation subsystem to alternate between a desublimation mode and a melting mode to produce carbon dioxide from input gaseous mixtures. The system can use a refrigeration subsystem to at least partially facilitate the cryogenic environment, and the refrigeration subsystem may include dry air as a refrigerant to facilitate refrigeration tasks that can be performed by the refrigeration subsystem. Dry air may be or include a gaseous mixture that may be similar or identical to atmospheric air, that may be controlled to have specific concentrations of certain gasses (e.g., nitrogen or other inert gasses), or the like, and the dry air may have no, or negligible amounts, of water. Additionally or alternatively, pure nitrogen may be used as a refrigerant in the refrigeration subsystem.

A large portion of power generation and industrial heating still involves using fossil fuels, such as hydrocarbon-based fuels, via combustion, which can involve, among other things, a heated process that converts oxygen and other inputs into carbon dioxide and other outputs. Combustion flue gas, which may be an exhaust gas of a combustion process, and which may include large amounts of carbon dioxide, can be vented into the atmosphere after, or while, the combustion process takes place. The flue gas may be or include greenhouse gas (GHG) emissions, which may be a major contributor to climate change. Carbon dioxide generated from combustion can be captured and can be sequestrated or used to mitigate potential challenges or consequences associated with climate change.

Flue gas generated from a combustion process, such as from power generation gas turbines or other combustion heaters, can be at low pressure and high temperature and can include high levels of oxygen as well as other contaminants such as nitrogen-based oxides, sulfur-based oxides, and the like. The oxygen and contaminants in the flue gas can cause carbon dioxide capture to be difficult and to consume excessive amounts of energy. Other carbon capture techniques may focus on solvent-based technologies, for example by using a solvent recirculation process where chemical solvent is used to absorb carbon dioxide from flue gas in an absorber. The carbon-dioxide-rich solvent can be regenerated in a distillation column to separate carbon dioxide from the solvent, and the regenerated lean solvent can be recycled back to the absorber. Due to the low pressure and high oxygen content in the flue gas, the solvent-absorption-based techniques often face challenges such as high energy consumption, high resource cost, high solvent degradation issues, and the like. Solvent-based processes can involve large amounts of process heating for solvent regeneration, and finding a carbon-free heating source for the solvent-based processes can be another challenge. Additionally or alternatively, solvent-based processes involve potential solvent leakage, which can cause environmental and safety consequences, and disposal of degraded solvent waste can be hazardous.

Cryogenic techniques for separation or capture of carbon dioxide can be used to address the above or other challenges. In some examples, the cryogenic techniques can involve a stream that includes carbon dioxide being chilled to low temperatures to form either liquid or solid. The carbon dioxide can then be separated from the residue gas. For the cryogenic carbon dioxide capture techniques, refrigeration can be used for flue gas chilling and carbon dioxide desublimation. Selecting a refrigeration cycle and refrigerant as well as cold and energy recovery can be used to develop a more efficient and advanced process. The cryogenic techniques can be used to desublimate carbon dioxide using safe and environmentally friendly systems and processes.

A system can use a cryogenic process or cryogenic techniques to perform carbon capture, such as carbon dioxide capture, via carbon dioxide desublimation. Raw flue gas, which may include nitrogen, oxygen, water, carbon dioxide, and some other minor impurities, can be compressed and dehydrated, and the compressed, dehydrated flue gas can be chilled to low temperature in a desublimation subsystem. The desublimation subsystem can cause carbon dioxide to desublimate and separate from the compressed, dehydrated flue gas. Lean flue gas, which may be the compressed, dehydrated flue gas after removal of the carbon dioxide, can leave the desublimation subsystem and can exchange heat with subsequently received raw flue gas to provide precooling before the lean flue gas passes through one or more power recovery expanders. Cooling or refrigeration for the desublimation subsystem can be provided by a refrigeration subsystem, which may be or include an external refrigerator, that can use a supercritical air (or nitrogen) refrigeration cycle with a power recovery expander. The system may not use hydrocarbon material, chemical solvents, or the like, which can lead to an inherently safe, emission-free, and hazardous-effluent-free process.

The system can be used to perform one or more processes for capturing carbon dioxide via desublimation of carbon dioxide from a gaseous mixture such as flue gas. The system can include a flue gas quenching subsystem, a compression subsystem, a dehydration subsystem, a carbon dioxide desublimation subsystem, a refrigeration subsystem, other suitable subsystems, or any combination thereof. The carbon dioxide desublimation subsystem can operate cyclically between a carbon dioxide desublimation mode via a desublimation module and a carbon dioxide melting mode via a melting module.

A gaseous mixture, which may be or include flue gas, can be high temperature originating from a source, such as a combustion process, and the gaseous mixture can be cooled to approximately ambient temperature. The pre-cooling process for the gaseous mixture can be performed via a water quench or other suitable type of cooling. The cooled gaseous mixture can be compressed using multi-stage compressors with interstage and discharge cooling. The compressor discharge pressure can be determined by an optimal desublimation pressure based on the carbon dioxide concentration in the gaseous mixture. The water content in the gaseous mixture can be removed through interstage and discharge cooling. Any remaining water can be further removed in a dehydrator subsystem to prevent freezing water in the downstream cryogenic process.

The compressed and dehydrated gaseous mixture can be pre-cooled by cold lean flue gas. In some examples, lean flue gas can be the gaseous mixture after carbon dioxide has been removed therefrom. The compressed and dehydrated gaseous mixture can be precooled to a temperature above, but close to, incipient of desublimation before being provided to the carbon dioxide desublimation subsystem. In some examples, the compressed and dehydrated gaseous mixture can be precooled to approximately 2 °C above incipient temperature. Refrigeration can be recovered from the lean flue gas leaving the carbon dioxide desublimation subsystem, and the recovered refrigeration can be used for precooling the compressed gaseous mixture. Additionally or alternatively, the precooling and the carbon dioxide desublimation subsystem can use external refrigeration, such as via the refrigeration subsystem, to provide cooling duty for carbon dioxide precooling and desublimation. The carbon dioxide desublimation subsystem can operate in a pressure range from less than approximately 50 psig to more than approximately 400 psig depending on a concentration of carbon dioxide in the gaseous mixture.

In some examples, the carbon dioxide desublimation subsystem can operate in cycles between two modes: a carbon dioxide desublimation mode associated with a desublimation module and a carbon dioxide melting mode associated with a melting module. In the carbon dioxide desublimation mode, the compressed and dehydrated gaseous mixture can be cooled by an external refrigerant, such as a refrigerant included in the refrigeration subsystem, to a temperature low enough to initiate desublimation of carbon dioxide. During the desublimation, carbon dioxide frost can form on a surface of a heat transfer element, such as a tube surface in a shell and tube heat exchanger, while a concentration of carbon dioxide in the compressed and dehydrated gaseous mixture decreases. As the desublimation temperature decreases with the carbon dioxide concentration in the compressed and dehydrated gaseous mixture, a final cooldown temperature of the compressed and dehydrated gaseous mixture can be determined by a composition of the compressed and dehydrated gaseous mixture as well as a desired recovery percentage of carbon dioxide.

As the carbon dioxide frost thickness increases with time, a thermal resistance increases. The carbon dioxide desublimation subsystem can be regenerated. For example, the carbon dioxide frost layer can be removed to regain heat and mass transfer capacity in the carbon dioxide desublimation subsystem. The regeneration may be performed via the carbon dioxide melting mode, and, in the carbon dioxide melting mode, the carbon dioxide frost can be melted and removed from the carbon dioxide desublimation subsystem. After the carbon dioxide desublimation subsystem is regenerated, an operating mode of the carbon dioxide desublimation subsystem can be switched from the carbon dioxide melting mode back to the carbon dioxide desublimation mode.

During the regeneration cycle, carbon dioxide liquid product, after being warmed, can be introduced into the carbon dioxide desublimation subsystem to contact with the carbon dioxide frost deposited on the heat transfer surface from the previous desublimation cycle. The carbon dioxide frost can be melted by heat transferring with the warm carbon dioxide liquid, and the carbon dioxide frost and the warm carbon dioxide liquid can flow into a carbon dioxide receiver together. A carbon dioxide circulation pump can cause the carbon dioxide from the receiver to exchange heat with a warm refrigerant inlet to a refrigerant compressor to recover cold from the carbon dioxide. The warmed carbon dioxide can be sent to the carbon dioxide desublimation subsystem to melt carbon dioxide frost.

A carbon dioxide product pump can produce net carbon dioxide product from the carbon dioxide receiver and can pump the net carbon dioxide product to high pressure for delivery, for example for subsequent use or sequestration. Before being sent out, the high-pressure carbon dioxide product can be heated to a battery limit temperature by process or refrigerant streams for refrigeration recovery.

The refrigeration subsystem can use dry air (or nitrogen) as a refrigerant. Additionally or alternatively, the refrigeration subsystem can operate in a reverse Brayton Cycle at supercritical conditions with the dry air (or nitrogen) as the refrigerant. In the reverse Brayton Cycle, the dry air (or nitrogen) can be compressed to a pressure higher than the critical pressure in an compressor and can be pre-cooled to a low temperature against ambient air and cold process streams before being provided to an expander. The dry air (or nitrogen) can be expanded to a low pressure in the expander to reach a desired low temperature and can be transmitted to the carbon dioxide desublimation subsystem for carbon dioxide desublimation. The cold low-pressure air (or nitrogen) from the carbon dioxide desublimation subsystem can exchange heat with the warm high-pressure air (or nitrogen) for refrigerant recovery before recycling back to the air compressor.

The dry air can be treated to remove any particles and moisture before being used as refrigerant. Treating the dry air can avoid any plugging in the cryogenic process. By using dry air as the refrigerant, the system can avoid using or otherwise introducing hydrocarbons, chemicals, or other hazardous materials, which can enhance (e.g., compared to other systems that do use hydrocarbons, chemical solvents, other hazardous materials, and the like) a safety and environmental friendliness of the system.

The lean flue gas leaving the carbon dioxide desublimation subsystem may be at low temperature and elevated pressure. Thus, refrigeration and energy can be recovered from the lean flue gas. The lean flue gas can be transmitted to a series of heat exchangers for gaseous mixture pre-cooling and refrigeration cycle streams cooling. The lean flue gas can additionally or alternatively go through one or more expanders to recover power before being vented to the atmosphere. The power generated from the one or more expanders can be used to generate electricity, to drive a compressor, or the like. To improve power recovery, the lean flue gas can be heated with waste heat coming from the gaseous mixture, from refrigerant compression heat, or the like before going through the expander. By heating up the lean flue gas, more power can be generated from the expander.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

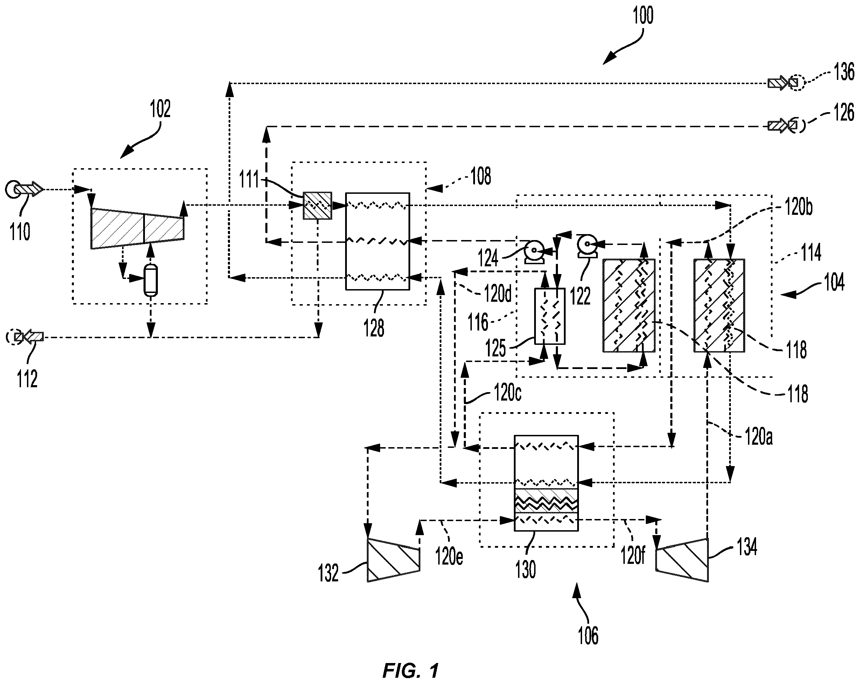

FIG. 1 is a flow diagram illustrating the operation of an example of a system 100 that can use cryogenic techniques to capture carbon dioxide from gaseous mixtures according to some examples of the present disclosure. As illustrated in FIG. 1, the system 100 can include a compression subsystem 102, a carbon dioxide desublimation subsystem 104, and a refrigeration subsystem 106. Other or alternative subsystems, components, features, and the like for the system 100 are possible. For example, the system 100 may additionally or alternatively include a pre-cooling subsystem 108, a quench subsystem, a dehydration subsystem, or the like.

The compression subsystem 102 may be positioned to receive a gaseous mixture 110. For example, the compression subsystem 102 may be positioned downstream from a separate system that may generate the gaseous mixture 110. In a particular example, the compression subsystem 102 may be positioned downstream from a power plant or other separate system that uses combustion to generate usable energy and that generates the gaseous mixture 110, for example as exhaust or otherwise as a by-product. The compression subsystem 102 may receive the gaseous mixture 110 and may compress the gaseous mixture 110 into a compressed gaseous mixture, for example by increasing a pressure on the gaseous mixture 110, cooling the gaseous mixture 110, or a combination thereof. In some examples, the gaseous mixture 110 may be or include flue gas, which may be heated exhaust gas from a combustion process and that includes carbon dioxide.

The compressed gaseous mixture may be transmitted to the pre-cooling subsystem 108 to be further cooled. The pre-cooling subsystem 108 can include a dryer 111 that can be used to remove water from the compressed gaseous mixture. In some examples, the pre-cooling subsystem 108 may use cooled lean flue gas, which may be the gaseous mixture 110 without any, or significant concentrations of, carbon dioxide, to cool the compressed gaseous mixture. By cooling the gaseous mixture 110, pre-cooling the compressed gaseous mixture, or a combination thereof, water 112 may be produced from the gaseous mixture 110, the compressed gaseous mixture, or a combination thereof. For example, the gaseous mixture 110, the compressed gaseous mixture, or a combination thereof may include steam, and cooling or pre-cooling the gaseous mixture 110, the compressed gaseous mixture, or a combination thereof may cause the steam to transition to water 112. The water 112 can be produced and removed from the system 100 to prevent ice from blocking any flowlines included in the system 100.

The compressed gaseous mixture can be transmitted to the carbon dioxide desublimation subsystem 104 subsequent to be compressed, pre-cooled, or a combination thereof. The carbon dioxide desublimation subsystem 104 may be coupled with the compression subsystem 102 to cause carbon dioxide to be produced or otherwise removed from the compressed gaseous mixture. In some examples, the carbon dioxide desublimation subsystem 104 can include multiple modules that can provide functionality for the carbon dioxide desublimation subsystem 104. As illustrated in FIG. 1, the carbon dioxide desublimation subsystem 104 can include a carbon dioxide desublimation module 114 and a carbon dioxide melting module 116, though other or additional suitable modules are possible for the carbon dioxide desublimation subsystem 104. The multiple modules of the carbon dioxide desublimation subsystem 104 can facilitate extraction of carbon dioxide from the compressed gaseous mixture.

The carbon dioxide desublimation subsystem 104 can switch between the carbon dioxide desublimation module 114 and the carbon dioxide melting module 116 via a carbon dioxide desublimation mode and a carbon dioxide melting mode. The carbon dioxide desublimation mode can use the carbon dioxide desublimation module 114 to cool the compressed gaseous mixture to cause carbon dioxide included in the compressed gaseous mixture to desublimate. The desublimated carbon dioxide may accumulate, for example as carbon dioxide frost, on one or more cooling elements 118 included in the carbon dioxide desublimation module 114. Cooling for the carbon dioxide desublimation module 114 may be at least partially provided by the refrigeration subsystem 106. For example, a first flowline 120a may provide cooled refrigerant to the carbon dioxide desublimation module 114, and the cooled refrigerant may exchange heat with the compressed gaseous mixture to cool the compressed gaseous mixture and to cause the carbon dioxide to desublimate onto the one or more cooling elements 118. The carbon dioxide desublimation subsystem 104 may be operated in the carbon dioxide desublimation mode until the one or more cooling elements 118 become saturated or otherwise lose a threshold amount of efficiency in capturing desublimated carbon dioxide from the compressed gaseous mixture.

The carbon dioxide desublimation subsystem 104 can switch from the carbon dioxide desublimation mode to the carbon dioxide melting mode to recharge the one or more cooling elements 118 and to produce or otherwise remove desublimated carbon dioxide from the system 100. The carbon dioxide desublimation subsystem 104 can use the carbon dioxide melting module 116 to operate in the carbon dioxide melting mode. In some examples, the carbon dioxide melting module 116 may include a carbon dioxide wash pump 122, a carbon dioxide product pump 124, a heat exchanger 125, and other suitable components for providing functionality for the carbon dioxide melting module 116. The carbon dioxide wash pump 122 can be activated to circulate liquid carbon dioxide, which may be at a higher temperature, pressure, or a combination thereof with respect to the desublimated carbon dioxide, through the one or more cooling elements 118. The liquid carbon dioxide may contact the desublimated carbon dioxide and may cause the desublimated carbon dioxide to melt or otherwise cohere to the liquid carbon dioxide. For example, the liquid carbon dioxide may cause the desublimated carbon dioxide to warm up enough, or to pressurize enough, to melt and cohere to the liquid carbon dioxide. The carbon dioxide wash pump 122 may be activated for a predetermined amount of time or otherwise long enough to remove enough desublimated carbon dioxide from the one or more cooling elements 118 to allow further desublimation of carbon dioxide to occur during the desublimation mode.

In some examples, the carbon dioxide product pump 124 can be activated to produce carbon dioxide. Producing carbon dioxide may involve transporting liquid, or solid/gaseous, carbon dioxide out of the system 100 and into carbon dioxide product pipelines or carbon dioxide storage or sequestration. Produced carbon dioxide 126 may be transported through a heat exchanger 128, which may be included in the pre-cooling subsystem 108, to exchange heat between subsequent compressed gaseous mixtures, lean flue gas, and the produced carbon dioxide 126. For example, the produced carbon dioxide 126 may absorb heat from, or provide cooling for, the subsequent compressed gaseous mixtures. In some examples, some liquid carbon dioxide may be prevented from being produced and may continue circulating in the carbon dioxide melting module 116 to be used for washing desublimated carbon dioxide from the one or more cooling elements 118.

The refrigeration subsystem 106 may include a temperature optimizer 130, a compressor 132, an expander 134, and any other suitable components that can provide functionality for the refrigeration subsystem 106. The temperature optimizer 130 may be or include a heat exchanger that can cause heating or cooling to be exchanged between the refrigerant, lean flue gas, or other materials. The refrigerant may be or include dry air, nitrogen, or the like, and the dry air may have no or negligible water content to prevent ice blockages in flowlines of the refrigeration subsystem 106. The compressor 132 may compress the refrigerant prior to the refrigerant being cooled in the temperature optimizer 130, and the expander 134 may expand, which may further cool, the refrigerant. In some examples, the refrigeration subsystem 106 may operate on a reverse Brayton Cycle at supercritical conditions for the refrigerant.

The refrigeration subsystem 106 may additionally or alternatively include flowlines 120a-f, which may form a loop that traverses the carbon dioxide desublimation subsystem 104. The first flowline 120a may transport the refrigerant from the expander 134 to the carbon dioxide desublimation module 114, a second flowline 120b may transport the refrigerant from the carbon dioxide desublimation module 114 to the temperature optimizer 130, a third flowline 120c may transport the refrigerant from the temperature optimizer 130 to the carbon dioxide melting module 116, a fourth flowline 120d may transport the refrigerant from the carbon dioxide melting module 116 to the compressor 132, a fifth flowline 120e may transport the refrigerant from the compressor 132 to the temperature optimizer 130, and a sixth flowline 120f may transport the refrigerant from the temperature optimizer 130 to the expander 134. Other suitable numbers (e.g., less than six or more than six) of flowlines or configurations of flowlines are possible for the refrigeration subsystem 106.

Once the carbon dioxide is desublimated from the compressed gaseous mixture in the carbon dioxide desublimation subsystem 104, exhaust gas may be generated and removed from the system 100. In some examples, the exhaust gas may be or include lean flue gas 136. The lean flue gas 136 may have the same or similar composition as the gaseous mixture 110 but may have little to no carbon dioxide. Additionally or alternatively, the lean flue gas 136 may be cooled to a temperature far below (e.g., more than 20 °C, more than 40 °C, more than 80 °C, more than 160 °C, or more) ambient temperature. The lean flue gas 136 can be used to cool the refrigerant, to pre-cool the subsequent compressed gaseous mixture, and the like prior to being vented to the atmosphere. For example, the lean flue gas 136 can be transported to the temperature optimizer 130 to provide cooling to, or otherwise absorb heat from, the refrigerant. Additionally or alternatively, the lean flue gas 136 can be transported to the heat exchanger 128 to provide cooling to, or otherwise absorb heat from, the subsequent compressed gaseous mixture. In some examples, and subsequently to being used in zero or more cooling or pre-cooling operations, the lean flue gas 136 can be vented to the atmosphere.

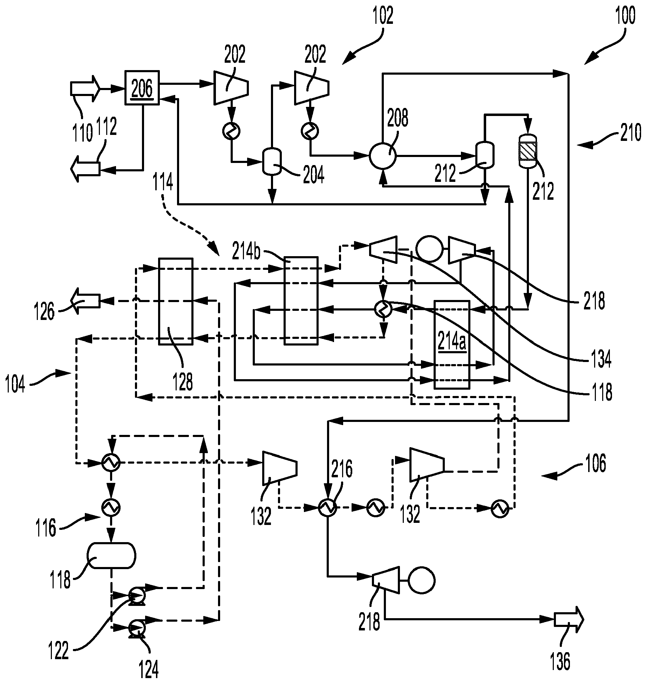

FIG. 2 is a flow diagram illustrating the operation of the example of the system 100 that uses cryogenic techniques to capture carbon dioxide from gaseous mixtures according to some examples of the present disclosure. As illustrated in FIG. 2, the system 100 can include the compression subsystem 102, the carbon dioxide desublimation subsystem 104, and the refrigeration subsystem 106, though the system 100 can include any additional or alternative subsystems for producing carbon dioxide from a gaseous mixture 110. The compression subsystem 102 can be positioned to receive the gaseous mixture 110, which may be or include flue gas that includes carbon dioxide. In some examples, the compression subsystem 102 can include a set of compressors 202, a set of water extractor(s) 204, and other suitable components for the compression subsystem 102. The set of compressors 202 can include one compressor, two compressors, three compressors, or more compressors to cause the gaseous mixture 110 to be converted into the compressed gaseous mixture. Each compressor of the set of compressors 202 may apply pressure to, or otherwise reduce a volume occupied by, the gaseous mixture 110. Compressing the gaseous mixture 110 into the compressed gaseous mixture may cause water, such as water 112, to be formed. The water 112 may be removed by the set of water extractor(s) 204, and the water 112 may be produced or otherwise removed from the system 100. Additionally or alternatively, a quench subsystem 206 may be used prior to providing the gaseous mixture 110 to the compression subsystem 102. The quench subsystem 206 may expose the gaseous mixture 110 to water to pre-cool the gaseous mixture 110, to pre-remove water from the gaseous mixture 110, or the like.

In some examples, the compressed gaseous mixture may be transported from the compression subsystem, through a heat exchanger 208, and to a dehydration subsystem 210. The heat exchanger 208 may be used to pre-cool, or further pre-cool, the compressed gaseous mixture. For example, lean flue gas can absorb heat from, or otherwise provide cooling to, the compressed gaseous mixture in the heat exchanger 208 prior to the lean flue gas being vented to the atmosphere. The dehydration subsystem 210 may include a dehydration module 212 that can be used to remove water from the compressed gaseous mixture. In some examples, the dehydration module 212 may remove a threshold amount of water to prevent ice from forming in the system 100 or to otherwise limit ice in the system 100 blocking any flowlines included in the system 100. The compressed, dehydrated gaseous mixture may be transported to the carbon dioxide desublimation subsystem 104.

The carbon dioxide desublimation subsystem 104 may include one or more heat exchangers, such as heat exchangers 214a-b, that can be used to recover refrigeration from the cold lean flue gas and refrigerant. For example, the dehydrated, compressed gaseous mixture can be pre-cooled in a first heat exchanger 214a with the cold lean flue gas, and the refrigerant can be pre-cooled in a second heat exchanger 214b using the cold lean flue gas and the refrigerant from a desublimator such as (or that may include) one or more cooling element 118. The first heat exchanger 214a or the second heat exchanger 214b may be included in the carbon dioxide desublimation module 114, which can be used by the carbon dioxide desublimation subsystem 104 in the carbon dioxide desublimation mode. In the carbon dioxide desublimation mode, carbon dioxide can be desublimated, such as via cooling, from the dehydrated, compressed gaseous mixture and deposited on the one or more cooling elements 118 of the carbon dioxide desublimation module 114.

Lean flue gas 136 can be produced, for example as exhaust from the carbon dioxide desublimation subsystem 104, and the lean flue gas 136 can be vented to the atmosphere. In some examples, the lean flue gas 136 may be similar or identical to the gaseous mixture 110 but may have little to no carbon dioxide. The lean flue gas 136 may be cooled far below (e.g., more than 20 °C, more than 40 °C, more than 80 °C, more than 160 °C, or more) ambient temperature and may be used to cool or pre-cool one or more materials in the system 100. For example, the lean flue gas 136 can be transported to the second heat exchanger 214b to absorb heat from, or otherwise provide cooling to, the refrigerant included in the refrigeration subsystem 106, and in a first heat exchanger 214a to absorb heat from, or otherwise provide cooling to, subsequent compressed gaseous mixtures. Additionally or alternatively, the lean flue gas 136 can be transported to heat exchanger 216 to absorb heat from, or otherwise provide cooling to, the refrigerant included in the refrigeration subsystem 106. Additionally or alternatively, the lean flue gas 136 may be provided to one or more expanders 218, which can expand the lean flue gas 136 and recover energy, such as via electricity, from the lean flue gas 136.

The desublimated carbon dioxide may be deposited, for example as carbon dioxide frost, on the one or more cooling elements 118. After a certain amount of time, the one or more cooling elements 118 may become saturated or may otherwise lose efficiency due to an accumulation of the desublimated carbon dioxide. After the certain amount of time, or subsequent to determining that the one or more cooling elements 118 are saturated or otherwise not performing above a threshold efficiency, the carbon dioxide desublimation subsystem 104 can switch from the carbon dioxide desublimation mode to the carbon dioxide melting mode by using the carbon dioxide melting module 116.

The carbon dioxide melting module 116 can include the carbon dioxide wash pump 122, the carbon dioxide product pump 124, and any other suitable components for the carbon dioxide melting module 116. The carbon dioxide wash pump 122 can circulate liquid carbon dioxide through the carbon dioxide desublimation subsystem 104. The liquid carbon dioxide may be at a higher temperature, a higher pressure, or a combination thereof with respect to the desublimated carbon dioxide. In some examples, the carbon dioxide wash pump 122 can cause the liquid carbon dioxide to contact a carbon dioxide receiver, which may be or include the one or more cooling elements 118, to contact the desublimated carbon dioxide. The liquid carbon dioxide may contact the desublimated carbon dioxide and may cause the desublimated carbon dioxide to melt or otherwise cohere to the liquid carbon dioxide. For example, the liquid carbon dioxide may cause the desublimated carbon dioxide to warm up enough, or to pressurize enough, to melt and cohere to the liquid carbon dioxide. The carbon dioxide wash pump 122 may be activated for a predetermined amount of time or otherwise long enough to remove enough desublimated carbon dioxide from the one or more cooling elements 118 to allow further desublimation of carbon dioxide to occur during the desublimation mode.

In some examples, the carbon dioxide product pump 124 can be activated to produce carbon dioxide. Producing carbon dioxide may involve transporting liquid, or solid/gaseous, carbon dioxide out of the system 100 and into carbon dioxide product pipelines, into carbon dioxide storage or sequestration, or into a combination thereof. Produced carbon dioxide 126 may be transported through a heat exchanger 128, which may be included in the refrigeration subsystem 106, to exchange heat between the refrigerant and the produced carbon dioxide 126. For example, the produced carbon dioxide 126 may absorb heat from, or provide cooling for, the refrigerant. In some examples, some liquid carbon dioxide may be prevented from being produced and may continue circulating in the carbon dioxide melting module 116 to be used for washing desublimated carbon dioxide from the one or more cooling elements 118.

In some examples, the refrigeration subsystem 106 may include a one or more compressors 132, an expander 134, and any other suitable components that can provide functionality for the refrigeration subsystem 106. The temperature optimizer 130 may use a heat exchanger, such as the heat exchanger 128, the second heat exchanger 214b, etc., that can cause heating or cooling to be exchanged between the refrigerant, the lean flue gas 136, the compressed gaseous mixture, or the like. The refrigerant may be or include dry air, nitrogen, or the like, and the dry air may have no or negligible water content to prevent ice blockages in flowlines of the refrigeration subsystem 106. The compressor 132 may compress the refrigerant prior to the refrigerant being cooled or subsequent to the refrigerant being heated, and the expander 134 may expand, which may further cool, the refrigerant. In some examples, the refrigeration subsystem 106 may operate on a reverse Brayton Cycle at supercritical conditions for the refrigerant.

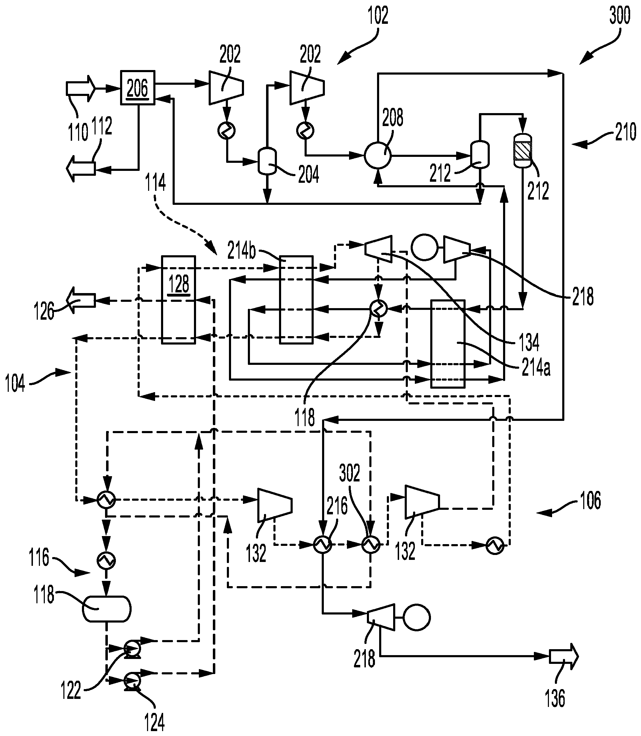

FIG. 3 is a flow diagram illustrating the operation of another example of a system 300 that uses cryogenic techniques to capture carbon dioxide from gaseous mixtures according to some examples of the present disclosure. As illustrated in FIG. 3, the system 300 can include the compression subsystem 102, the carbon dioxide desublimation subsystem 104, and the refrigeration subsystem 106, though the system 300 can include any additional or alternative subsystems for producing carbon dioxide from a gaseous mixture 110. The compression subsystem 102 can be positioned to receive the gaseous mixture 110, which may be or include flue gas that includes carbon dioxide. In some examples, the compression subsystem 102 can include a set of compressors 202, a set of water extractor(s) 204, and other suitable components for the compression subsystem 102. The set of compressors 202 can include one compressor, two compressors, three compressors, or more compressors to cause the gaseous mixture 110 to be converted into the compressed gaseous mixture. Each compressor of the set of compressors 202 may apply pressure to, or otherwise reduce a volume occupied by, the gaseous mixture 110. Compressing the gaseous mixture 110 into the compressed gaseous mixture may cause water, such as water 112, to be formed. The water 112 may be removed by the set of water extractor(s) 204, and the water 112 may be produced or otherwise removed from the system 300. Additionally or alternatively, a quench subsystem 206 may be used prior to providing the gaseous mixture 110 to the compression subsystem 102. The quench subsystem 206 may expose the gaseous mixture 110 to water to pre-cool the gaseous mixture 110, to pre-remove water from the gaseous mixture 110, or the like.

In some examples, the compressed gaseous mixture may be transported from the compression subsystem, through a heat exchanger 208, and to a dehydration subsystem 210. The heat exchanger 208 may be used to pre-cool, or further pre-cool, the compressed gaseous mixture. For example, the lean flue gas 136 can absorb heat from, or otherwise provide cooling to, the compressed gaseous mixture in the heat exchanger 208 prior to the lean flue gas 136 being vented to the atmosphere. The dehydration subsystem 210 may include a dehydration module 212 that can be used to remove water from the compressed gaseous mixture. In some examples, the dehydration module 212 may remove a threshold amount of water to prevent ice from forming in the system 300 or to otherwise limit ice in the system 300 to prevent blocking any flowlines included in the system 300. The compressed, dehydrated gaseous mixture may be transported to the carbon dioxide desublimation subsystem 104.

The carbon dioxide desublimation subsystem 104 may include one or more heat exchangers, such as heat exchangers 214a-b, that can be used to recover refrigeration from the cold lean flue gas and refrigerant. For example, the dehydrated, compressed gaseous mixture can be pre-cooled in a first heat exchanger 214a with the cold lean flue gas, and the refrigerant can be pre-cooled in a second heat exchanger 214b using the cold lean flue gas and the refrigerant from the desublimator such as (or that may include) one or more cooling elements 118. The first heat exchanger 214a or the second heat exchanger 214b may be included in the carbon dioxide desublimation module 114, which can be used by the carbon dioxide desublimation subsystem 104 in the carbon dioxide desublimation mode. In the carbon dioxide desublimation mode, carbon dioxide can be desublimated, such as via cooling, from the dehydrated, compressed gaseous mixture and deposited on the one or more cooling elements 118 of the carbon dioxide desublimation module 114.

Lean flue gas 136 can be produced, for example as exhaust from the carbon dioxide desublimation subsystem 104, and the lean flue gas 136 can be vented to the atmosphere. In some examples, the lean flue gas 136 may be similar or identical to the gaseous mixture 110 but may have little to no carbon dioxide. The lean flue gas 136 may be cooled far below (e.g., more than 20 °C, more than 40 °C, more than 80 °C, more than 160 °C, or more) ambient temperature and may be used to cool or pre-cool one or more materials in the system 300. For example, the lean flue gas 136 can be transported to the second heat exchanger 214b to absorb heat from, or otherwise provide cooling to, the refrigerant included in the refrigeration subsystem 106, and in a first heat exchanger 214a to absorb heat from, or otherwise provide cooling to, subsequent compressed gaseous mixtures. Additionally or alternatively, the lean flue gas 136 can be transported to heat exchanger 216 to absorb heat from, or otherwise provide cooling to, the refrigerant included in the refrigeration subsystem 106. Additionally or alternatively, the lean flue gas 136 may be provided to one or more expanders 218, which can expand the lean flue gas 136 and recover energy, such as via electricity, from the lean flue gas 136.

The desublimated carbon dioxide may be deposited, for example as carbon dioxide frost, on the one or more cooling elements 118. After a certain amount of time, the one or more cooling elements 118 may become saturated or may otherwise lose efficiency due to an accumulation of the desublimated carbon dioxide. After the certain amount of time, or subsequent to determining that the one or more cooling elements 118 are saturated or otherwise not performing above a threshold efficiency, the carbon dioxide desublimation subsystem 104 can be switched from the carbon dioxide desublimation mode to the carbon dioxide melting mode by using the carbon dioxide melting module 116.

The carbon dioxide melting module 116 can include the carbon dioxide wash pump 122, the carbon dioxide product pump 124, and any other suitable components for the carbon dioxide melting module 116. The carbon dioxide wash pump 122 can circulate liquid carbon dioxide through the carbon dioxide desublimation subsystem 104. The liquid carbon dioxide may be at a higher temperature, a higher pressure, or a combination thereof with respect to the desublimated carbon dioxide. In some examples, the carbon dioxide wash pump 122 can cause the liquid carbon dioxide to contact a carbon dioxide receiver, which may be or include the one or more cooling elements 118, to contact the desublimated carbon dioxide. The liquid carbon dioxide may contact the desublimated carbon dioxide and may cause the desublimated carbon dioxide to melt or otherwise cohere to the liquid carbon dioxide. For example, the liquid carbon dioxide may cause the desublimated carbon dioxide to warm up enough, or to pressurize enough, to melt and cohere to the liquid carbon dioxide. The carbon dioxide wash pump 122 may be activated for a predetermined amount of time or otherwise long enough to remove enough desublimated carbon dioxide from the one or more cooling elements 118 to allow further desublimation of carbon dioxide to occur during the desublimation mode.

In some examples, the carbon dioxide product pump 124 can be activated to produce carbon dioxide. Producing carbon dioxide may involve transporting liquid, or solid/gaseous, carbon dioxide out of the system 300 and into carbon dioxide product pipelines, into carbon dioxide storage or sequestration, or into a combination thereof. Produced carbon dioxide 126 may be transported through a heat exchanger 128, which may be included in the refrigeration subsystem 106, to exchange heat between the refrigerant and the produced carbon dioxide 126. For example, the produced carbon dioxide 126 may absorb heat from, or provide cooling for, the refrigerant. In some examples, some liquid carbon dioxide may be prevented from being produced and may continue circulating in the carbon dioxide melting module 116 to be used for washing desublimated carbon dioxide from the one or more cooling elements 118.

In some examples, the refrigeration subsystem 106 may include a one or more compressors 132, an expander 134, and any other suitable components that can provide functionality for the refrigeration subsystem 106. The temperature optimizer 130 may use a heat exchanger, such as the heat exchanger 128, the second heat exchanger 214b, etc., that can cause heating or cooling to be exchanged between the refrigerant, the lean flue gas 136, the compressed gaseous mixture, or the like. The refrigerant may be or include dry air, such as nitrogen, atmospheric air, or the like, and the dry air may have no or negligible water content to prevent ice blockages in flowlines of the refrigeration subsystem 106. The compressor 132 may compress the refrigerant prior to the refrigerant being cooled or subsequent to the refrigerant being heated, and the expander 134 may expand, which may further cool, the refrigerant. In some examples, the refrigeration subsystem 106 may operate on a reverse Brayton Cycle at supercritical conditions for the refrigerant. The refrigeration subsystem 106 may additionally have heat exchanger 302 that may facilitate heat exchange between the refrigerant and the liquid carbon dioxide or the desublimated carbon dioxide.

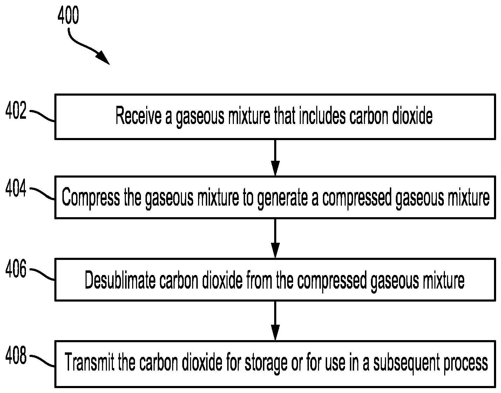

FIG. 4 is a flowchart of a process 400 for capturing carbon dioxide from gaseous mixtures using cryogenic techniques according to some examples of the present disclosure. At block 402, a gaseous mixture that includes carbon dioxide is received. The gaseous mixture may be or include flue gas that can be generated from a combustion process such as an energy generation process. The gaseous mixture may be received at a compression subsystem of a cryogenic carbon capture system that includes a set of subsystems, modules, or the like. In some examples, the gaseous mixture may be received at a quench subsystem prior to being received at the compression subsystem. In some examples, the quench subsystem may expose the gaseous mixture to water to remove water from the gaseous mixture, to pre-cool the gaseous mixture, or the like.

At block 404, the gaseous mixture is compressed to generate a compressed gaseous mixture. The compression subsystem can compress the gaseous mixture to generate the compressed gaseous mixture. In some examples, the compression subsystem can include a set of compressors, one or more water extractors, and the like to compress the gaseous mixture into the compressed gaseous mixture. The set of compressors may include one or more compressors, and the gaseous mixture may traverse each compressor of the one or more compressors, or any subset thereof, to become the compressed gaseous mixture. At each compressor, or between adjacent compressors, the one or more water extractors may remove any water that may have formed from compressing the gaseous mixture. For example, compressing the gaseous mixture, cooling the gaseous mixture, or a combination thereof may cause steam included in the gaseous mixture to condense into water, and the one or more water extractors can remove the condensed water from the gaseous mixture.

At block 406, carbon dioxide is desublimated from the compressed gaseous mixture. A carbon dioxide desublimation subsystem of the cryogenic carbon capture system can cause the carbon dioxide to desublimate from the compressed gaseous mixture. The carbon dioxide desublimation subsystem can switch between a carbon dioxide desublimation module and a carbon dioxide melting module, for example via a carbon dioxide desublimation mode and a carbon dioxide melting mode. The carbon dioxide desublimation mode can use the carbon dioxide desublimation module to cool the compressed gaseous mixture and to cause carbon dioxide included in the compressed gaseous mixture to desublimate. The desublimated carbon dioxide may accumulate, for example as carbon dioxide frost, on one or more cooling elements included in the carbon dioxide desublimation subsystem. Cooling for the carbon dioxide desublimation subsystem may be at least partially provided by a refrigeration subsystem of the cryogenic carbon capture subsystem. For example, the refrigeration subsystem may provide cooled refrigerant, such as dry air, to the carbon dioxide desublimation subsystem, and the cooled refrigerant may exchange heat with the compressed gaseous mixture to cool the compressed gaseous mixture and to cause the carbon dioxide to desublimate onto the one or more cooling elements.

The carbon dioxide desublimation subsystem can switch from the carbon dioxide desublimation mode to the carbon dioxide melting mode to recharge the one or more cooling elements and to produce or otherwise remove desublimated carbon dioxide from the cryogenic carbon capture system. The carbon dioxide desublimation subsystem can use the carbon dioxide melting module to operate in the carbon dioxide melting mode. In some examples, the carbon dioxide melting module may include a carbon dioxide wash pump, a carbon dioxide product pump, a heat exchanger, and the like. The carbon dioxide wash pump can be activated to circulate liquid carbon dioxide, which may be at a higher temperature, pressure, or a combination thereof with respect to the desublimated carbon dioxide, through the one or more cooling elements. The liquid carbon dioxide may contact the desublimated carbon dioxide and may cause the desublimated carbon dioxide to melt or otherwise cohere to the liquid carbon dioxide. For example, the liquid carbon dioxide may cause the desublimated carbon dioxide to warm up enough, or to pressurize enough, to melt and cohere to the liquid carbon dioxide.

At block 408, the carbon dioxide is transmitted for storage or for use in a subsequent process that uses carbon dioxide as an input, catalyst, a stabilizer, or the like. In some examples, the carbon dioxide product pump can be activated to produce the carbon dioxide. Producing the carbon dioxide may involve transporting liquid, or solid/gaseous, carbon dioxide out of the cryogenic carbon capture system and into carbon dioxide product pipelines, such as pipelines that provide the carbon dioxide as input to a subsequent process, or carbon dioxide storage or sequestration. The produced carbon dioxide may be transported through a heat exchanger to exchange heat between subsequent compressed gaseous mixtures, lean flue gas, and the produced carbon dioxide. For example, the produced carbon dioxide may absorb heat from, or provide cooling for, the subsequent compressed gaseous mixtures, the refrigerant, or a combination thereof. In some examples, some liquid carbon dioxide may be prevented from being produced and may continue circulating in the carbon dioxide desublimation system to be used to facilitate producing subsequent sets of carbon dioxide.

The following is a set of examples of the present disclosure, though other examples are possible. As used below, any reference to a series of examples is to be understood as a reference to each of those examples disjunctively (e.g., "Examples 1-4" is to be understood as "Examples 1, 2, 3, or 4").

Example 1 is a system comprising: a compression subsystem positionable to receive a gaseous mixture and to compress the gaseous mixture into a compressed gaseous mixture, the gaseous mixture including carbon dioxide; a dehydration subsystem coupled with the compression subsystem to remove water from the compressed gaseous mixture to generate a compressed dry gaseous mixture; a carbon dioxide desublimation subsystem coupled with the compression subsystem and the dehydration subsystem to receive the compressed dry gaseous mixture and to cause the carbon dioxide to desublimate from the compressed dry gaseous mixture, the carbon dioxide desublimation subsystem switchable between a desublimation module and a melting module to produce the carbon dioxide from the compressed dry gaseous mixture; and a refrigeration subsystem coupled with the carbon dioxide desublimation subsystem to provide cooling to the carbon dioxide desublimation subsystem using dry air as a refrigerant, the refrigeration subsystem operable at a first pressure that is higher than a critical pressure of the refrigerant.

Example 2 is the system of example 1, further comprising a quench subsystem coupled with the compression subsystem to cool the gaseous mixture prior to providing the gaseous mixture to the compression subsystem.

Example 3 is the system of any of examples 1-2, wherein a warm refrigerant stream is introduced to the tube side of the desublimator to melt the CO2 frost during regeneration mode.

Example 4 is the system of any of examples 1-3, wherein a refrigerant expander can be used to generate electric power or to drive a compressor.

Example 5 is the system of any of examples 1-4, wherein the carbon dioxide desublimation module is at an elevated pressure range from approximately 50 psig to approximately 400 psig and at a pressure below a pressure in which carbon dioxide liquid forms the temperature is lowered.

Example 6 is the system of any of examples 1-5, wherein the flue gas is precooled in multiple steps to a temperature higher than the desublimation temperature by at least 1 °F.

Example 7 is a system comprising: a compression subsystem positionable to receive a gaseous mixture and to compress the gaseous mixture into a compressed gaseous mixture, the gaseous mixture including carbon dioxide, the compression subsystem (i) comprising a quench subsystem for removing water from the gaseous mixture and (ii) coupled with a dehydration subsystem to remove water from the compressed gaseous mixture to generate a dehydrated compressed gaseous mixture; a carbon dioxide desublimation subsystem coupled with the compression subsystem to receive the dehydrated compressed gaseous mixture and to cause the carbon dioxide to desublimate from the dehydrated compressed gaseous mixture, the carbon dioxide desublimation subsystem switchable between a desublimation module and a melting module to produce the carbon dioxide from the dehydrated compressed gaseous mixture; and a refrigeration subsystem coupled with the carbon dioxide desublimation subsystem to provide cooling to the carbon dioxide desublimation subsystem using dry air as a refrigerant, wherein the refrigeration subsystem is operable at a pressure that is higher than a critical pressure of the refrigerant.

Example 8 is the system of example 7, wherein the carbon dioxide desublimation module is operable at an elevated pressure range from approximately 50 psig to approximately 400 psig and at a pressure below a second pressure in which carbon dioxide liquid forms at a lower temperature.

Example 9 is the system of any of examples 7-8, further comprising a water quench subsystem to precool the flue gas, wherein the water quench subsystem comprises a quench tower and a quench water circulation system.

Example 10 is the system of any of examples 7-9, wherein quench water usable by the water quench subsystem is coolable by air in a wet surface air cooler by spraying produced water condensate into the air to enhance a heat transfer efficiency.

Example 11 is the system of any of examples 7-10, wherein at least one step of a plurality of flue gas precooling steps is an air cooling step through at least one air cooler, and wherein the air cooler can be a wet surface air cooler by spraying the produced water condensate into the air to enhance the heat transfer efficiency.

Example 12 is the system of any of examples 7-11, wherein the gaseous mixture comprises flue gas, wherein lean flue gas is generatable by the carbon dioxide desublimation subsystem while producing the carbon dioxide from the compressed gaseous mixture, and wherein the lean flue gas is the gaseous mixture after a desired amount of carbon dioxide is removed.

Example 13 is the system of any of examples 7-12, wherein heat is exchangeable between the lean flue gas and subsequently received flue gas to pre-cool the subsequently received flue gas coming from the compression subsystem.

Example 14 is a method comprising: receiving, by a compression subsystem of a cryogenic carbon capture system, a gaseous mixture that comprises carbon dioxide; compressing, by the compression subsystem, the gaseous mixture into a compressed gaseous mixture; dehydrating, by a dehydration subsystem of the cryogenic carbon capture system, the compressed gaseous mixture to generate a compressed dry gaseous mixture; desublimating, by a carbon dioxide desublimation subsystem of the cryogenic carbon capture system, the carbon dioxide from the compressed dry gaseous mixture, the carbon dioxide desublimation subsystem alternating between a desublimation module and a melting module to produce the carbon dioxide from the compressed dry gaseous mixture, cooling provided to the carbon dioxide desublimation subsystem by a refrigeration subsystem of the cryogenic carbon capture system that includes dry air as a refrigerant, the refrigeration subsystem operated at a first pressure that is higher than a critical pressure of the refrigerant; and transmitting, by the carbon dioxide desublimation subsystem, carbon dioxide product from the carbon dioxide for storage or for use in a subsequent process.

Example 15 is the method of example 14, further comprising removing, using a quench subsystem coupled with the compression subsystem, moisture from the gaseous mixture prior to providing the gaseous mixture to the compression subsystem.

Example 16 is the method of any of examples 14-15, wherein desublimating the carbon dioxide comprises: operating the carbon dioxide desublimation subsystem in a desublimation mode associated with the desublimation module; and operating the carbon dioxide desublimation subsystem in a melting mode associated with the melting module, wherein, in the melting mode, an operating pressure is higher than a triple point pressure of pure carbon dioxide to cause the carbon dioxide to melt instead of vaporize.

Example 17 is the method of any of examples 14-16, wherein the gaseous mixture comprises flue gas, wherein lean flue gas is generated by the carbon dioxide desublimation subsystem while producing the carbon dioxide from the compressed gaseous mixture, wherein the lean flue gas is the gaseous mixture after a desired amount of carbon dioxide is removed, wherein heat is exchanged between the lean flue gas and subsequently received flue gas to pre-cool the subsequently received flue gas coming from the compression subsystem.

Example 18 is the method of any of examples 14-17, further comprising generating, using an energy recovery subsystem coupled with the carbon dioxide desublimation subsystem and the refrigeration subsystem, power by expanding the lean flue gas prior to emitting the lean flue gas to atmosphere.

Example 19 is the method of any of examples 14-18, wherein the refrigerant comprises pure nitrogen, wherein the refrigerant contains no hydrocarbons and no chemical solvents.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples.

## Claims

1. A system comprising:
a compression subsystem positionable to receive a gaseous mixture and to compress the gaseous mixture into a compressed gaseous mixture, the gaseous mixture including carbon dioxide;
a dehydration subsystem coupled with the compression subsystem to remove water from the compressed gaseous mixture to generate a compressed dry gaseous mixture;
a carbon dioxide desublimation subsystem coupled with the compression subsystem and the dehydration subsystem to receive the compressed dry gaseous mixture and to cause the carbon dioxide to desublimate from the compressed dry gaseous mixture, the carbon dioxide desublimation subsystem switchable between a desublimation module and a melting module to produce the carbon dioxide from the compressed dry gaseous mixture, the carbon dioxide desublimation subsystem operable at a pressure above approximately 50 psig and below a point at which liquid carbon dioxide liquid is formable in the compressed dry gaseous mixture; and
a refrigeration subsystem coupled with the carbon dioxide desublimation subsystem to provide cooling to the carbon dioxide desublimation subsystem using dry air as a refrigerant, the refrigeration subsystem operable at a first pressure that is higher than a critical pressure of the refrigerant.

2. The system of claim 1, further comprising a quench subsystem coupled with the compression subsystem to cool the gaseous mixture prior to providing the gaseous mixture to the compression subsystem.

3. The system of any of claims 1-2, wherein the carbon dioxide desublimation subsystem is operable in (i) a desublimation mode associated with the desublimation module and (ii) a melting mode associated with the melting module, and wherein an operating pressure associated with the melting mode is higher than a triple-point pressure of pure carbon dioxide to cause the carbon dioxide to melt instead of vaporize.

4. The system of any of claims 1-3, wherein the gaseous mixture comprises flue gas, wherein lean flue gas is generatable by the carbon dioxide desublimation subsystem while producing the carbon dioxide from the compressed dry gaseous mixture, and wherein the lean flue gas is the gaseous mixture after a desired amount of carbon dioxide is removed.

5. The system of claim 4, wherein heat is exchangeable between the lean flue gas and subsequently received flue gas to pre-cool the subsequently received flue gas coming from the compression subsystem, and wherein the subsequently received flue gas is precooled in multiple steps to a temperature higher than a carbon dioxide desublimation temperature by approximately 1 °F or more.

6. The system of any of claims 1-3 or 5, wherein carbon dioxide product is generatable from the desublimated carbon dioxide, wherein the carbon dioxide product is usable to pre-cool the gaseous mixture and refrigerant, wherein carbon dioxide liquid is usable in the melting mode as a heating medium to directly contact carbon dioxide frost to melt the carbon dioxide frost, and wherein the carbon dioxide liquid is the carbon dioxide product recirculated by a pump.

7. The system of claim 6, wherein a warm refrigerant stream is coupled with the melting module of the carbon dioxide desublimation subsystem to melt the carbon dioxide frost during the melting mode, wherein the carbon dioxide liquid is heatable by at least the warm refrigerant stream or a process stream to a temperature lower than a carbon dioxide vaporization temperature at the operating pressure to recover refrigeration from the carbon dioxide liquid, and wherein a carbon dioxide receiver is positionable in a carbon dioxide circulation loop to function as a surge volume in response to the carbon dioxide desublimation subsystem switching between the desublimation mode and the melting mode.

8. The system of any of claims 1-3 or 5, further comprising an energy recovery subsystem coupled with the carbon dioxide desublimation subsystem and the refrigeration subsystem to generate power or to drive a compressor by expanding the lean flue gas prior to emitting the lean flue gas to atmosphere, wherein the energy recovery subsystem further comprises a refrigerant expander for generating electric power or for driving the compressor.

9. The system of any of claims 1-3, 5, or 8, wherein the refrigerant comprises pure nitrogen, wherein the refrigerant contains no hydrocarbons and no chemical solvents, wherein the lean flue gas is heated against a warm stream before being provided to an expander to recover more power, and wherein the warm stream includes a discharge of the compression subsystem or the received flue gas.

10. A method comprising:
receiving, by a compression subsystem of a cryogenic carbon capture system, a gaseous mixture that comprises carbon dioxide;
compressing, by the compression subsystem, the gaseous mixture into a compressed gaseous mixture;
dehydrating, by a dehydration subsystem of the cryogenic carbon capture system, the compressed gaseous mixture to generate a compressed dry gaseous mixture;
desublimating, by a carbon dioxide desublimation subsystem of the cryogenic carbon capture system, the carbon dioxide from the compressed dry gaseous mixture, the carbon dioxide desublimation subsystem alternating between a desublimation module and a melting module to produce the carbon dioxide from the compressed dry gaseous mixture, cooling provided to the carbon dioxide desublimation subsystem by a refrigeration subsystem of the cryogenic carbon capture system that includes dry air as a refrigerant, the refrigeration subsystem operated at a first pressure that is higher than a critical pressure of the refrigerant; and
transmitting, by the carbon dioxide desublimation subsystem, carbon dioxide product from the carbon dioxide for storage or for use in a subsequent process.

11. The method of claim 10, further comprising removing, using a quench subsystem coupled with the compression subsystem, moisture and heat from the gaseous mixture prior to providing the gaseous mixture to the compression subsystem.

12. The method of any of claims 10-11, wherein desublimating the carbon dioxide comprises:
operating the carbon dioxide desublimation subsystem in a desublimation mode associated with the desublimation module; and
operating the carbon dioxide desublimation subsystem in a melting mode associated with the melting module, wherein, in the melting mode, an operating pressure is higher than a triple point pressure of pure carbon dioxide to cause the carbon dioxide to melt instead of vaporize.

13. The method of any of claims 10-12, wherein the gaseous mixture comprises flue gas, wherein lean flue gas is generated by the carbon dioxide desublimation subsystem while producing the carbon dioxide from the compressed gaseous mixture, wherein the lean flue gas is the gaseous mixture after a desired amount of carbon dioxide is removed, wherein heat is exchanged between the lean flue gas and subsequently received flue gas to pre-cool the subsequently received flue gas coming from the compression subsystem.

14. The method of claim 13, further comprising generating, using an energy recovery subsystem coupled with the carbon dioxide desublimation subsystem and the refrigeration subsystem, power by expanding the lean flue gas prior to emitting the lean flue gas to atmosphere.

15. The method of any of claims 10-12, wherein the refrigerant comprises pure nitrogen, wherein the refrigerant contains no hydrocarbons and no chemical solvents.
